# FASCICULE DE BREVET EUROPEEN

(11) **EP 0 643 365 B1**
(45) Date de publication et mention de la délivrance du brevet: **02.02.2000**
(21) Numéro de dépôt: 94402033.8
(22) Date de dépôt: 13.09.1994
(51) Int. Cl.: G06K 15/00, H04N 1/00

(54) **Dispositif et procédé d'émulation d'une imprimante pour ordinateur personnel à partir d'une imprimante de télécopieur**
Vorrichtung und Verfahren zur Emulation eines PC-Druckers von einem Faksimiledrucker
Device and method for emulating a personal computer printer from a facsimile printer

(30) Priorité: 14.09.1993 FR 9310912
(43) Date de publication de la demande: 15.03.1995
(73) Titulaire: SOCIETE D'APPLICATIONS GENERALES D'ELECTRICITE ET DE MECANIQUE SAGEM Société anonyme française, 75783 Paris Cédex 16 (FR)
(72) Inventeur: Picard, François, F-78700 Conflans (FR)
(74) Mandataire: Bloch, Gérard

(56) Documents cités:
- EP-A- 0 519 253
- US-A- 4 991 200
- IBM TECHNICAL DISCLOSURE BULLETIN., vol.30, no.7, Décembre 1987, NEW YORK US pages 307 - 310 'Use of GIII Facsimile as an Image Scanner and a Printer'
- PATENT ABSTRACTS OF JAPAN vol. 13, no. 439 (E-827) 3 Octobre 1989 & JP-A-01 168 158 (NEC CORP.) 3 Juillet 1989

## Description

De nombreux types d'appareils électroniques utilisés en bureautique comportent une imprimante, ou y sont associés, afin d'éditer et exploiter les données reçues et/ou traitées par ces appareils. On peut par exemple penser aux télécopieurs et aux ordinateurs personnels.

Pour ce qui concerne les télécopieurs, l'imprimante, intégrée au télécopieur, est commandée de façon relativement simple, puisqu'elle imprime des lignes de points séparés par des blancs de longueur variable.

Pour ce qui concerne les ordinateurs personnels, l'imprimante est externe et comporte une logique sophistiquée pour interpréter un jeu étendu de commandes d'impression de caractères, soit en mode ligne soit en mode graphique. Une telle imprimante d'ordinateur est coûteuse et volumineuse.

Le document EP-A-519 253 enseigne d'affecter l'imprimante d'un télécopieur également à un ordinateur personnel, en prévoyant, dans le télécopieur, un circuit d'émulation d'une imprimante pour ordinateur, qui commute le fonctionnement du télécopieur du mode d'impression facsimilé au mode d'impression caractère, lorsque l'ordinateur envoie des données au télécopieur une liaison spécifique. Ce document reflète l'objet du préambule des revendications indépendantes 1 et 5.

US-A-4 991 200 enseigne d'adapter un ordinateur personnel afin d'utiliser un télécopieur distant comme imprimante ou comme scanner pour cet ordinateur.

Cependant l'impression, sous la commande de l'ordinateur, prévue dans ces documents entraîne l'indisponibilité temporaire des autres fonctions du télécopieur, ce qui est difficilement acceptable si l'ordinateur commande fréquemment des impressions. Par ailleurs, et même si le télécopieur est en fonctionnement mais sans l'aide de l'imprimante,

l'ordinateur ne peut pas accéder à l'imprimante disponible, ce qui oblige l'utilisateur de ce dernier à réitérer sa demande d'impression.

La présente invention vise à s'affranchir de ces difficultés.

A cet effet, l'invention concerne, tout d'abord, un dispositif d'émulation d'une imprimante d'ordinateur personnel à partir de l'imprimante d'un télécopieur qui comporte des circuits de commande de l'imprimante par des données de télécopie, dispositif comportant des moyens de réception de données provenant de l'ordinateur et des moyens de commande de l'imprimante en fonction de ces données agencés pour scruter l'imprimante, en déterminer la disponibilité et en gérer l'impression lorsque les circuits de commande la laissent disponible, caractérisé par le fait que les moyens de commande sont agencés pour effectuer une scrutation cyclique de l'imprimante et commander son impression par les données de l'ordinateur lorsqu'elle est disponible.

Ainsi, même en cas d'impression à partir de l'ordinateur, le télécopieur conserve sa fonction "télécopie" et peut échanger des messages avec un autre télécopieur, puisque le circuit d'émulation décharge le télécopieur de la tâche de l'impression commandée par l'ordinateur. Par ailleurs, un échange de messages de télécopie en cours laisse disponible l'imprimante pour l'ordinateur.

L'invention concerne aussi un procédé d'émulation d'une imprimante d'ordinateur personnel à partir de l'imprimante d'un télécopieur qui comporte des circuits de commande de l'imprimante par des données de télécopie, procédé dans lequel on relie l'ordinateur à un dispositif d'émulation d'imprimante du télécopieur activé par la réception de données de l'ordinateur et agencé pour en gérer l'impression lorsque les circuits de commande la laissent disponible, procédé caractérisé par le fait que, après activation du dispositif d'émulation et génération d'une demande d'impression, le dispositif d'émulation scrute l'imprimante et détermine sa disponibilité et, en cas d'indisponibilité, la demande d'impression est mémorisée pour entraîner une scrutation cyclique de l'imprimante pour déclencher l'impression des données de l'ordinateur lorsque l'imprimante devient disponible.

L'invention sera mieux comprise à l'aide de la description suivante de la forme de réalisation préférée du dispositif d'émulation pour la mise en oeuvre du procédé de l'invention, en référence au dessin annexé, sur lequel :
- la figure 1 est un schéma par blocs représentant un télécopieur comportant le dispositif d'émulation de l'invention, relié à un ordinateur personnel,
- la figure 2 est un schéma par blocs du dispositif d'émulation et
- la figure 3 est un diagramme de cheminement exposant le fonctionnement du dispositif d'émulation.

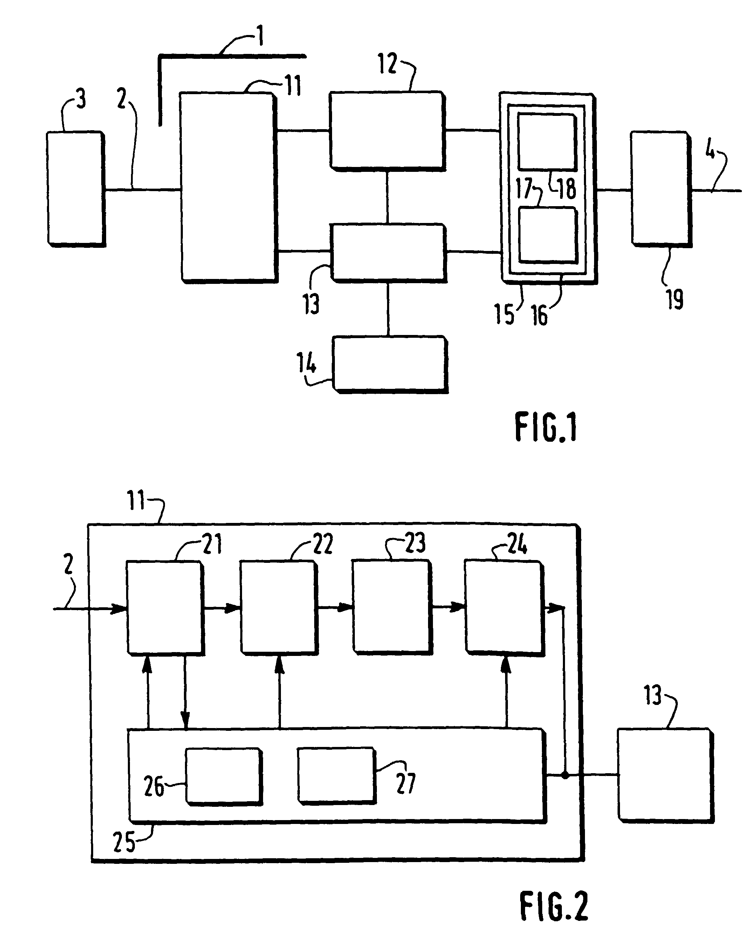

Le télécopieur 1 représenté sur la figure 1 est relié, par une liaison 2 bidirectionnelle, à un ordinateur personnel 3 et, par une ligne 4, au réseau téléphonique commuté.

Le télécopieur 1 comporte un dispositif d'émulation 11 relié à la liaison 2, de type RS 232C, ainsi qu'à un contrôleur 12 et à une entrée d'un coupleur d'imprimante 13 contrôlant une imprimante 14 du télécopieur 1. Le contrôleur 12 commande le coupleur 13 et est relié à un dispositif 15 de connexion télécopie à l'imprimante 14, comportant un bloc de calcul 16 dans lequel est prévue une mémoire 17 et une porte ET 18 à deux entrées. Le dispositif de connexion 15 est relié à un circuit d'interface 19 relié à la ligne 4. Le coupleur 13 est relié en entrée au dispositif de connexion 15.

Le dispositif d'émulation 11 est représenté plus en détails sur la figure 2.

La liaison 2 est reliée à une mémoire tampon 21 reliée en sortie à un circuit 22 d'interprétation de commandes dont la sortie est reliée à un circuit générateur graphique 24 à travers un circuit 23 tampon de commandes.

Le circuit générateur graphique 24 est relié en sortie au coupleur d'imprimante 13, lui-même relié en sortie à un bloc de calcul 25 commandant les circuits 22 et 24 et échangeant des données avec la mémoire tampon 21. Une mémoire 26 et une porte ET 27 à deux entrées sont prévues dans le bloc de calcul 25.

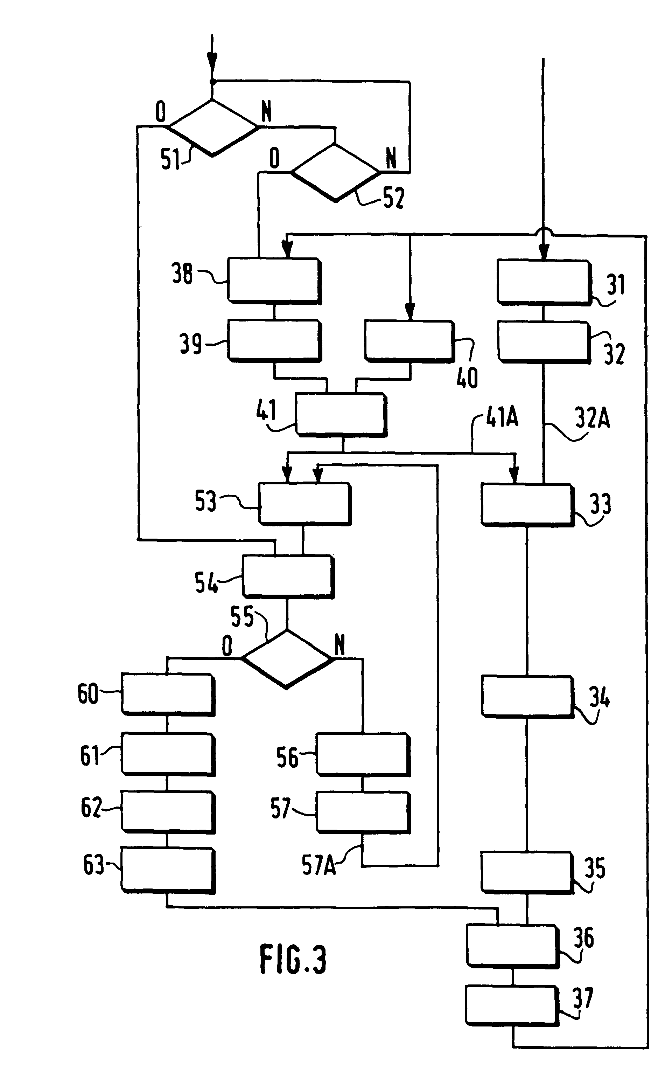

Le fonctionnement du télécopieur 1 avec le dispositif d'émulation 11 va maintenant être expliqué en regard du diagramme de cheminement de la figure 3.

On suppose que, le télécopieur 1 étant au repos, il reçoit, par la ligne 4 et le circuit d'interface 19, un message de télécopie contenant des données à imprimer.

Le message est mémorisé dans le dispositif 15 à une étape 31 et, à une étape 32 suivant le début de cette réception, une demande d'impression "télécopie" 32A est mémorisée dans le dispositif de connexion 15. Cette demande est appliquée à un circuit combinatoire, ici la porte logique ET 18, recevant un signal de disponibilité 41A de l'imprimante 14, comme expliqué plus loin.

En cas de disponibilité de l'imprimante 14, la porte ET 18 fournit, à une étape 33, un signal de commande d'impression "télécopie" provoquant, à une étape 34, l'activation de circuits du bloc de calcul 16 qui gèrent le déroulement de l'impression. A une étape 35, le bloc de calcul 16 prépare un fichier contenant, dans la forme voulue pour l'impression, les données à imprimer.

A une étape 36, le bloc de calcul 16 active le coupleur d'imprimante 13 à travers le contrôleur 12 et lui transmet le fichier ci-dessus. A une étape 37, l'imprimante 14 imprime le fichier et le coupleur 13 est ensuite désactivé par le contrôleur 12.

A une étape 38, le bloc de calcul 25 est désactivé, si tel était le cas comme expliqué plus loin, et une dernière page imprimée partiellement, est, à une étape 39, éjectée si le cas se présente.

Après l'étape 37, le bloc de calcul 16 est désactivé à une étape 40 et on passe à une étape 41 dans laquelle on mémorise dans la mémoire 17 et fournit le signal de disponibilité 41A de l'imprimante 14, appliqué à la porte ET 18. L'étape 39 se poursuit aussi par l'étape 41.

Une séquence d'impression de données provenant de l'ordinateur personnel 3 va maintenant être exposée. Cette impression est gérée par le dispositif d'émulation 11.

A une étape 51, le dispositif d'émulation 11 teste la réception, dans la mémoire tampon 21, d'un caractère provenant de la liaison 2. Si le résultat du test est positif (o), il active, à une étape 54, le bloc de calcul 25 et engendre une demande d'impression "ordinateur" 54A.

Cette activation peut aussi (fonction OU) être commandée par la porte ET 27 à une étape 53. La porte ET 27 est reliée à la mémoire 26 et en reçoit, sur sa première entrée, un signal 57A de demande d'impression "ordinateur" mémorisée, comme expliqué plus loin, et, par sa seconde entrée, est reliée à la mémoire 17 et en reçoit le signal de disponibilité 41A.

Après l'étape 54, une scrutation cyclique est effectuée pour tester, à une étape 55, si l'imprimante 14 est disponible ou si elle est utilisée par ailleurs ou en défaut. Si elle n'est pas disponible (N), le bloc de calcul 25 émet sur la liaison 2, à une étape 56, à travers la mémoire tampon 21, un ordre, ici X OFF, commandant l'arrêt de l'émission de données par l'ordinateur personnel 3 et, à une étape 57, la demande d'impression "ordinateur" 54A est mémorisée dans la mémoire 26 sous la forme du signal 57A. Cette demande d'impression "ordinateur" 57A mémorisée est, comme indiqué, appliquée en rebouclage sur la porte ET 27. Les étapes 53-55 se répètent cycliquement pour détecter sans retard la disponibilité de l'imprimante 14 dans le cas où une demande d'impression "ordinateur" 57A a été mémorisée.

Le bloc de calcul 25 comporte ainsi une boucle de scrutation 53-57 comprenant la mémoire 26 mémorisant, par le signal 57A, la réception des données de l'ordinateur 3.

En cas de réponse positive (o) à l'étape 55, on passe à une étape 60, dans laquelle on active le circuit d'interprétation 22 et le générateur graphique 24. Une signalisation, X ON, est aussi envoyée sur la liaison 2 pour inviter l'ordinateur 3 à émettre ses données à imprimer, avec les données associées de commande, définissant la façon selon laquelle doivent être imprimées les données ci-dessus.

A une étape 61, il est procédé à l'interprétation des commandes, ici à la norme de la marque enregistrée Proprinter, dans le circuit 22 et, à une étape 62, le circuit tampon de commandes 23 engendre, d'après les commandes interprétées, une liste de commandes élémentaires appartenant à un jeu de commandes restreint ici à quatre commandes. Chaque commande comporte des champs de commande, ou arguments, définissant des paramètres d'impression, tel que "gras", "souligné", "surligné" et autres, qui augmentent la puissance de chaque commande.

On dispose ainsi de moyens de conversion 22, 23 pour convertir des données de commande des données de l'ordinateur 3 en données sélectionnées dans le jeu, ou menu, de commandes prédéterminé. Les commandes ainsi converties peuvent être exécutées par l'imprimante 14, ce qui réalise l'émulation voulue.

A mesure qu'elles sont fournies, les commandes élémentaires sont exécutées à une étape 63, les données de la mémoire tampon 21 sont exploitées et les données à imprimer sont électroniquement mises en page.

Les étapes 36 et 37 pour l'impression se déroulent ensuite.

Il est prévu une temporisation effectuée dans le bloc de calcul 25 pour terminer la session de transmission des données sur la ligne 2 en cas d'absence prolongée de réception de caractères. En cas de non réception (N) de caractère à l'étape 51, on teste, à une étape 52, si un temporisateur, remis à zéro par toute réception de caractère provenant de la liaison 2, a atteint une valeur de seuil prédéterminée. Si tel n'est pas le cas (N), on reboucle à l'étape 51. Si le seuil est atteint, on passe à l'étape 38 de désactivation du bloc de calcul 25.

On comprend ainsi qu'en cas de demande d'impression "télécopieur" ou "ordinateur", celle-ci est soit réalisée immédiatement si l'imprimante 14 est disponible (signal 41A). Sinon, le signal 41A inhibe l'exécution de l'une ou l'autre des impressions, aux étapes respectives 33 et 53, 55, tout en permettant cependant la mémorisation de la demande d'impression correspondante 32A et 57A. Cette demande d'impression entraîne la scrutation cyclique de l'état de disponibilité de l'imprimante 14 par les portes ET aux étapes 33 et 53 et commande l'activation (34, 54) des blocs de calcul 16, 25 associés dès que l'imprimante 14 redevient disponible (41A).

Ainsi, dans le procédé de l'invention, on relie l'ordinateur 3 au dispositif 11 d'émulation d'imprimante du télécopieur activé par la réception de données de l'ordinateur 3 et, après activation du dispositif d'émulation 11 et génération de la demande d'impression 57A, le dispositif d'émulation 11 scrute l'imprimante 14 et détermine sa disponibilité et, en cas d'indisponibilité, la demande d'impression 54A est mémorisée pour entraîner une scrutation cyclique de l'imprimante 14 pour déclencher l'impression des données de l'ordinateur 3 lorsque l'imprimante 14 devient disponible.

On comprendra que le dispositif d'émulation 11 pourrait être externe au télécopieur et, par exemple, appartenir à l'ordinateur 3, le contrôleur 12 étant doublé si nécessaire.

## Revendications

1. Dispositif d'émulation d'une imprimante d'ordinateur personnel (3) à partir de l'imprimante (12-14) d'un télécopieur qui comporte des circuits (15, 19) de commande de l'imprimante (12-14) par des données de télécopie, dispositif comportant des moyens (21) de réception de données provenant de l'ordinateur (3) et des moyens (22-25) de commande de l'imprimante (12-14) en fonction de ces données agencés pour scruter l'imprimante (12-14), en déterminer la disponibilité (41A) et en gérer l'impression lorsque les circuits (15, 19) de commande la laissent disponible, caractérisé par le fait que les moyens de commande (22-25) sont agencés pour effectuer une scrutation (27) cyclique de l'imprimante (12-14) et commander son impression par les données de l'ordinateur (3) lorsqu'elle est disponible (41A).

2. Dispositif selon la revendication 1, dans lequel lesdits moyens (22-25) de commande de l'imprimante (14) comportent une boucle de scrutation (53-57) comprenant des moyens de mémorisation (26) de la réception des données de l'ordinateur (3).

3. Dispositif selon la revendication 2, dans lequel la boucle de scrutation comporte une porte ET (27) reliée, par une première entrée, aux moyens de mémorisation (26) et agencée pour, par une deuxième entrée, être reliée à des moyens (17) sensibles à l'état de disponibilité de l'imprimante (14).

4. Dispositif selon la revendication 2, dans lequel les moyens de commande comportent des moyens de conversion (22, 23) pour convertir des données de commande des données de l'ordinateur (3) en données sélectionnées dans un menu prédéterminé.

5. Procédé d'émulation d'une imprimante d'ordinateur personnel (3) à partir de l'imprimante (12-14) d'un télécopieur qui comporte des circuits (15, 19) de commande de l'imprimante (12-14) par des données de télécopie, procédé dans lequel on relie l'ordinateur (3) à un dispositif (11) d'émulation d'imprimante du télécopieur activé par la réception de données de l'ordinateur (3) et agencé pour en gérer l'impression lorsque les circuits (15, 19) de commande la laissent disponible, procédé caractérisé par le fait que, après activation (54) du dispositif d'émulation (11) et génération d'une demande d'impression (54A), le dispositif d'émulation (11) scrute (55) l'imprimante (12-14) et détermine sa disponibilité et, en cas d'indisponibilité, la demande d'impression (54A) est mémorisée (57) pour entraîner une scrutation cyclique (53) de l'imprimante pour déclencher (60) l'impression des données de l'ordinateur (3) lorsque l'imprimante (14) devient disponible (41A).

## Claims

1. Device for emulating a printer of a personal computer (3) from the printer (12-14) of a facsimile machine which includes circuits (15, 19) for controlling the printer (12-14) by means of facsimile data, the device comprising means (21) for receiving data from the computer (3) and means (22-25) for controlling the printer (12-14) according to these data and arranged to scan the printer (12-14), to determine the availability (41A) thereof and to manage the printing thereof when the control circuits (15, 19) leave it available, characterised in that the control means (22-25) are arranged to carry out cyclic scanning (27) of the printer (12-14) and control its printing by the data of the computer (3) when the printer is available (41 A).

2. Device according to claim 1, wherein the said means (22-25) for controlling the printer (14) comprise a scanning loop (53-57) including memory means (26) for receiving data from the computer (3).

3. Device according to claim 2, wherein the scanning loop includes an AND gate (27) connected by a first input to the memory means (26) and arranged to be connected by a second input to means (17) which are sensitive to the state of availability of the printer (14).

4. Device according to claim 2, wherein the control means include conversion means (22, 23) to convert control data of the data of the computer (3) into data selected in a predetermined menu.

5. Process for emulating a printer of a personal computer (3) from the printer (12-14) of a facsimile machine which includes circuits (15, 19) for controlling the printer (12-14) by facsimile data, a process in which the computer (3) is connected to a printer emulation device (11) of the facsimile machine activated by the reception of data from the computer (3) and arranged to manage the printing thereof when the control circuits (15, 19) leave it available, the process being characterised in that, after activation (54) of the emulation device (11) and generation of a printing request (54A), the emulation device (11) scans (55) the printer (12-14) and determines its availability and, if it is not available, the printing request (54A) is stored (57) to cause cyclic scanning (53) of the printer to activate (60) the printing of data from the computer (3) when the printer (14) becomes available (41A).

## Patentansprüche

1. Vorrichtung zur Emulation eines Druckers eines Personalcomputers (3) auf der Basis des Druckers (12-14) eines Telefaxgerätes, welches Schaltungen (15, 19) zur Steuerung des Druckers (12-14) mit Telefaxdaten aufweist, wobei die Vorrichtung Mittel (21) zum Empfang von aus dem Computer (3). kommenden Daten aufweist und Mittel (22-25) zur Steuerung des Druckers (12-14) als Funktion dieser Daten, die derart ausgebildet sind, daß sie den Drucker (12-14) abtasten, dessen Verfügbarkeit bestimmen (41A) und dessen Druck unterstützen, wenn die Steuerschaltungen (15, 19) diesen verfügbar lassen, dadurch gekennzeichnet, daß die Steuermittel (22-25) derart ausgebildet sind, daß sie eine zyklische Abtastung des Druckers (12-14) bewirken und dessen Druck mit Hilfe der Daten des Computers (3) steuern, wenn er verfügbar ist (41A).

2. Vorrichtung nach Anspruch 1, wobei die Mittel (22-25) zur Steuerung des Druckers (14) eine Abtastschleife (53-57) aufweisen, die Speichermittel (26) zum Empfang der Daten des Computers (3) aufweist.

3. Vorrichtung nach Anspruch 2, wobei die Abtastschleife ein UND-Gatter (27) aufweist, das über einen ersten Eingang mit den Speichermitteln (26) gekoppelt ist und derart angeordnet ist, daß es über einen zweiten Eingang mit Mitteln (17) verbindbar ist, die den Zustand der Verfügbarkeit des Druckers (14) erfassen können.

4. Vorrichtung nach Anspruch 2, wobei die Steuermittel Konvertierungsmittel (22, 23) aufweisen, um Steuerdaten der Daten des Computers (3) in ausgewählte Daten zu konvertieren, die in einem vorgegebenen Menü ausgewählt werden.

5. Verfahren zur Emulation eines Personalcomputers (3) auf der Basis des Druckers (12-14) eines Telefaxgerätes, welches Schaltungen (15, 19) zur Steuerung des Druckers (12-14) mit Telefaxdaten aufweist, wobei der Computer (3) mit einer Vorrichtung (11) zur Emulation des Druckers des Telefaxgerätes gekoppelt wird, die durch den Empfang von Daten von dem Computer (3) aktiviert wird und derart ausgebildet ist, daß sie deren Druck unterstützt, wenn die Steuerschaltungen (15, 19) diesen freigeben, wobei das Verfahren dadurch gekennzeichnet ist, daß nach Aktivierung (54) der Emulationsvorrichtung (11) und Erzeugung eines Druckauftrags (54A) die Emulationsvorrichtung (11) den Drukker (12-14) abtastet (55) und dessen Verfügbarkeit bestimmt und der Druckauftrag (54A) im Falle der Nichtverfügbarkeit gespeichert wird (57), um eine zyklische Abtastung (53) des Druckers zu veranlassen, um den Druck der Daten des Computers (3) auszulösen (60), sobald der Drucker (14) verfügbar wird (41A).
